# EUROPÄISCHE PATENTSCHRIFT

(11) **EP 1 362 661 B1**
(45) Veröffentlichungstag und Bekanntmachung des Hinweises auf die Patenterteilung: **10.01.2007**
(21) Anmeldenummer: 03010432.7
(22) Anmeldetag: 09.05.2003
(51) Int. Cl.: B23K 9/20

(54) **Fügesystemkopf, Fügesystem und Verfahren zum Zuführen und Fügen von Elementen**
Bonding head, system and method for feeding and bonding elements
Tête, système et méthode d'approvisionnement et de fixation d'éléments

(30) Priorität: 16.05.2002 DE 10223147
(43) Veröffentlichungstag der Anmeldung: 19.11.2003
(73) Patentinhaber: Newfrey LLC, Newark, Delaware 19711 (US)
(72) Erfinder: Schmitt, Klaus Gisbert, Dr., 35390 Giessen (DE); Schneider, Michael, 35633 Lahnau (DE)
(74) Vertreter: Haar, Lucas Heinz Jörn

(56) Entgegenhaltungen:
- WO-A-01/62426

## Beschreibung

Die vorliegende Erfindung betrifft einen Fügesystemkopf zur Befestigung an einem beweglichen Gestell, insbesondere an einem Roboter, mit
- einer Halteeinrichtung für ein Element, das auf ein Bauteil zu fügen ist, und
- einer Fügeantriebseinrichtung, um die Halteeinrichtung zum Fügen entlang einer Fügerichtung zu bewegen.

Eine derartige Vorrichtung ist der WO-A-62426 zu entnehmen.

Ferner betrifft die vorliegende Erfindung ein Fügesystem mit einem Roboter, der in wenigstens zwei Koordinatenachsen beweglich ist, und einem Fügesystemkopf, der an dem Roboter befestigt ist.

Schließlich betrifft die vorliegende Erfindung ein Verfahren zum Zuführen von Elementen von einer stationären Einheit zu einem beweglichen Fügesystemkopf und zum Fügen von zugeführten Elementen mittels des Fügesystemkopfes auf Bauteile.

Ein derartiger Fügesystemkopf, ein solches Fügesystem bzw. ein derartiges Verfahren zum Zuführen und Fügen von Elementen mittels eines Fügesystemkopfes sind allgemein bekannt. Der Begriff Fügen soll sich im vorliegenden Zusammenhang auf sämtliche Verbindungsarten von Elementen mit Bauteilen beziehen, insbesondere Verbindungen von Metallelementen mit Metallbauteilen, beispielsweise durch Kleben, Umformen, wie z.B. Nieten, oder durch Stoffvereinigen, wie z.B. Schweißen, einschließlich von Kurzzeit-Lichtbogenschweißen.

Das Kurzzeit-Lichtbogenschweißen wird häufig als Bolzenschweißen bezeichnet, obgleich nicht ausschließlich Bolzen geschweißt werden. Ein aktuelles System zum Bolzenschweißen im industriellen Einsatz in Verbindung mit einem Roboter ist bekannt aus der Broschüre "Neue TUCKER Technologie. Bolzenschweißen mit System!", Emhart TUCKER, 9/99. Das Bolzenschweißen findet hauptsächlich, nicht jedoch ausschließlich, in der Fahrzeugtechnik Anwendung. Dabei werden Metallelemente, wie Metallbolzen, mit und ohne Gewinde, Ösen, Muttern etc. auf das Blech der Fahrzeugkarosserie aufgeschweißt. Die Metallelemente dienen dann als Anker bzw. Befestigungselemente, um beispielsweise Innenraumausstattungen, Leitungen und ähnliches an dem Karosserieblech festzulegen. Bei dem Fügesystemkopf, der aus der obengenannten Emhart TUCKER-Veröffentlichung bekannt ist, ist die Fügeantriebseinrichtung entweder als elektrischer Linearmotor oder als Kombination aus einem Hubmagneten und einer Feder gebildet.

Die Halteeinrichtung ist gebildet durch eine einteilige Spannzange, die in radialer Richtung elastisch aufweitbar ist. Die Elemente sind in der Regel Schweißbolzen, die einen Kopf mit einem etwas größeren Durchmesser als der Bolzenschaft aufweisen. Die Bolzen werden bei dem bekannten System mittels Druckluft über geeignete Zuführschläuche dem Schweißkopf zugeführt. Dabei werden die Bolzen "Kopf voran" von hinten in die Spannzange gefördert. Dabei schlägt der Bolzen gewöhnlich von innen an die Spannzange an, ohne jedoch durch diese hindurchzutreten. Ein koaxial zu der Spannzange vorgesehener Ladestift wird anschließend betätigt, um den so zugeförderten Bolzen durch die Spannzange hindurchzudrücken. Dabei wird die Spannzange radial elastisch aufgeweitet, wenn der Kopf des Bolzens hindurchtritt. Anschließend schnappt die Spannzange elastisch um den Schaft des Bolzens herum zu und hält diesen in der Lage fest, die durch den Hub des Ladestiftes bestimmt ist.

Die Fügeantriebseinrichtung in Form des Linearmotors (oder der Kombination aus Hubmagnet/Feder) hat einen Hub von wenigen mm. Ferner ist der Schweißkopf an dem Ende eines Armes des Roboters in der Regel über einen pneumatischen oder hydraulischen Schlitten befestigt. Das heißt, der ganze Schweißkopf ist in einer Richtung parallel zur Schweißachse mittels des Schlittens beweglich, der einen wesentlich größeren Hub als der Linearmotor aufweist. Der Schweißkopf weist ferner eine Steuereinrichtung zur Steuerung des Linearmotors und des Ladestiftes auf, die räumlich getrennt von dem Schweißkopf, genauer in einem stationären Zuführer, vorgesehen ist.

Zum Durchführen eines Schweißvorganges wird zunächst der Roboter so programmiert, daß er in eine vorbestimmte Position fährt, in der die Schlitten- und Linearmotorachse senkrecht auf dem Blech stehen, auf das der Bolzen zu schweißen ist. Der Bolzen ist vorgespannt, so daß er gegenüber einem Stützfuß vorsteht. Anschließend wird der Schlitten betätigt, bis der Stützfuß auf dem Blech auftrifft. Der in der Halteeinrichtung gehaltene Bolzen liegt dann auf dem Blech auf Anschließend erfolgt eine Nullinienbestimmung der Halteeinrichtung in bezug auf das Blech. Alternativ gibt es jedoch auch stützfußlose Verfahren zur Nullinienbestimmung.

Anschließend wird bei dem Schweißen mit Stützfuß ein elektrischer Vorstrom eingeschaltet, der durch den Bolzen und das Bauteil hindurch fließt. Dann wird der Bolzen gegenüber dem Bauteil mittels des Linearmotors (Hubvorrichtung) angehoben. Es bildet sich ein Lichtbogen. Dann wird auf den Schweißstrom umgeschaltet. Durch den hohen Schweißstrom schmelzen die einander gegenüberliegenden Stirnseiten von Bolzen und Bauteil an. Anschließend wird der Bolzen wieder auf das Bauteil abgesenkt, so daß sich die wechselseitigen Schmelzen vermischen. Mit dem Erreichen des Bauelementes und dem Kurzschluß des Lichtbogens, oder kurz vorher, wird der Schweißstrom abgeschaltet. Die Gesamtschmelze erstarrt, die Schweißverbindung ist erfolgt.

Nun wird der Schweißkopf von dem angeschweißten Bolzen abgezogen, unter Verwendung des Schlittens. Der Schlitten ist unter anderem deswegen notwendig, weil die Bewegung des Abziehens genau in der Achse des aufgeschweißten Bolzens erfolgen muß. Ansonsten würde aufgrund der einteiligen Spannzange die Gefahr bestehen, den Bolzen und/oder die Spannzange zu beschädigen. Der Roboterarm alleine ist zu einer derart präzisen linearen Bewegung in einer beliebigen Raumausrichtung nicht in der Lage. Denn aufgrund der Überlagerung der hierzu notwendigen gleichzeitigen Regelung mehrerer Bewegungskomponenten von Roboterarmen können derartige Linearbewegungen mit dem Roboter allein nur mit einer gewissen Welligkeit durchgeführt werden.

Der bekannte Schweißkopf weist eine vergleichsweise große axiale Erstreckung auf. Dadurch, daß der Schweißkopf ferner in axialer Richtung von dem Bolzen abgezogen werden muß, ist der Einsatz des Schweißkopfes an schwer zugänglichen Stellen nur eingeschränkt möglich.

Ferner gibt es Entwicklungen, die Robotertechnik zum Zuführen des Bolzens einzusetzen. Dabei nimmt ein separater Greifer vorsortierte Bolzen und bringt sie zur Schweißstelle. Dies ist offenbart in "Bolzenschweißen. Grundlagen und Anwendung" von Trillmich, Welz, Fachbuchreihe Schweißtechnik, DVS Verlag, 1997, Kapitel 9.3. Dabei wird erläutert, daß sich diese Technik besonders bei Kopfbolzen anbietet, die wegen ihrer Form und Größe nicht durch Schläuche geblasen werden können. Diese Bauart wird "Pick-up-System" genannt.

Ferner ist ein Schweißkopf der Firma Nelson bekanntgeworden, bei dem eine Hubvorrichtung an dem Schweißkopf einen kragarmartig seitlich auskragenden Träger aufund abbewegt. An dem Endbereich des Trägers ist eine Halteeinrichtung mit Spannzange starr montiert. Die Bolzen werden wie bei dem oben beschriebenen Schweißkopf von TUCKER von hinten zu der Spannzange zugeführt, mittels eines Druckluftschlauches, der sich durch den Träger erstreckt. Der Endbereich des Trägers mit der daran festgelegten Haltevorrichtung läßt sich leichter an unzugänglichen Stellen positionieren. Die Hubvorrichtung zur Bewegung des Kragarmes und die zugehörige Steuereinrichtung sind im Anfangsbereich des Trägers angeordnet.

Vor diesem Hintergrund besteht die Aufgabe der Erfindung darin, einen verbesserten Fügesystemkopf, ein verbessertes Fügesystem sowie ein verbessertes Verfahren zum Zuführen und Fügen von zugeführten Elementen anzugeben.

Diese Aufgabe wird bei dem eingangs genannten Fügesystemkopf dadurch gelöst, daß die Halteeinrichtung an dem Fügesystemkopf um eine Drehachse drehbar gelagert ist, die quer zur Fügerichtung verläuft.

Bei dem erfindungsgemäße Fügesystemkopf handelt es sich um ein vollkommen neuartiges Konzept. Denn zum Fügen, insbesondere zum Bolzenschweißen, erfolgt der Fügevorgang im Stand der Technik immer in einer Linearbewegung. Demzufolge war es im Stand der Technik üblich, die Halteeinrichtung allenfalls entlang einer geradlinigen Achse verschieblich zu lagern. Beispielsweise ist es bekannt, den Fügesystemkopf insgesamt an einem Schlitten verschieblich zu lagern, der wiederum an dem Roboter befestigt wird.

Durch die drehbare Lagerung der Halteeinrichtung an dem Fügesystemkopf ist es nunmehr möglich, die Halteeinrichtung entlang einer Kreisbahn oder Teilkreisbahn zu bewegen. Hierdurch wird die Voraussetzung für eine Vielzahl von grundlegenden Änderungen der bisherigen Konzepte von Fügesystemköpfen geschaffen. Die Drehbarkeit der Halteeinrichtung ist konstruktiv vergleichsweise einfach zu realisieren. Insbesondere ist es möglich, die Halteeinrichtung auf der Kreisbahn zu verdrehen, um unterschiedliche Schweißpositionen schnell und ohne große Bewegungsabläufe mittels des Roboters zu erreichen, beispielsweise eine Schweißposition zum Schweißen in vertikaler Richtung nach unten und anschließend ein Schweißvorgang über Kopf.

Die Verdrehbarkeit als zusätzlicher Freiheitsgrad am Fügesystemkopf ist dabei für eine Vielzahl von Anwendungsfällen hinreichend. Wenn man berücksichtigt, daß auch der Träger selbst mittels des Roboters in der Regel um seine Längsachse verdrehbar ist und im Raum beliebig positionierbar ist, lassen sich Fügevorgänge auch an sehr unzugänglichen Stellen durchführen. Das Störkantenprofil des Fügewerkzeuges wird dabei durch den notwendigen Schwenkradius bestimmt.

Bei dem erfindungsgemäßen Fügesystem wird die obige Aufgabe dadurch gelöst, daß an dem Roboter ein erfindungsgemäßer Fügesystemkopf befestigt ist.

Das erfindungsgemäße Verfahren zum Zuführen von Elementen von einer stationären Einheit zu einem beweglichen Fügesystemkopf und zum Fügen von zugeführten Elementen mittels des Fügesystemkopfes auf Bauteile, wobei der Fügesystemkopf eine Halteeinrichtung für ein Element aufweist, die um eine Achse drehbar gelagert ist, die quer zur Fügerichtung verläuft, beinhaltet die Schritte, ein Element von der stationären Einheit zu der Übergabestation an dem Fügesystemkopf zuzuführen, die Halteeinrichtung hin zu der Übergabestation zu drehen, ein Element von der Übergabestation in die Halteeinrichtung zu übernehmen und das übernommene Element auf ein Bauteil zu fügen.

Bei dem erfindungsgemäßen Verfahren erfolgt demgemäß eine grundsätzliche Abkehr von dem Gedanken, Elemente von der stationären Einheit unmittelbar der Halteeinrichtung zuzuführen. Statt dessen werden die Elemente einer Übergabestation an dem Fügesystemkopf zugeführt und die Halteeinrichtung wird hin zu der Übergabestation gedreht, um die Elemente zu übernehmen. Die Halteeinrichtung "holt" sich folglich die Elemente jeweils von der Übergabestation. Hierdurch erfolgt eine Entkopplung zwischen der Zuführeinrichtung, die die Übergabestation aufweist, und der Halteeinrichtung. Dies ist Voraussetzung für eine Reihe von Vorteilen, wie sie nachstehend im Detail erläutert werden.

Von besonderem Vorzug ist es, wenn die Halteeinrichtung und die Fügeantriebseinrichtung als ein Fügewerkzeug um die Drehachse drehbar gelagert sind. Bei dieser Ausführungsform bilden die Halteeinrichtung und die Fügeantriebseinrichtung eine drehbare Einheit mit geringen Abmessungen. Dies gilt insbesondere dann, wenn eine Steuereinrichtung zum Steuern der Fügeantriebseinrichtung zwar an dem Schweißkopf, aber räumlich getrennt von dem Fügewerkzeug vorgesehen ist. Das Fügewerkzeug kann demzufolge mit geringen Abmessungen und geringer Störkantenrelevanz gebildet werden.

Dabei ist es besonders bevorzugt, wenn das Fügewerkzeug an einem Endbereich eines vorstehenden länglichen Trägers um die Drehachse herum drehbar gelagert ist.

Durch die Anordnung eines Fügewerkzeuges mit geringen Abmessungen an dem Endbereich eines länglichen Trägers ist es möglich, das Fügewerkzeug an schwer zugängliche Orte zu verbringen. Dabei ist keine Übertragung einer Hubbewegung über lange Distanzen (Kragarm oder ähnliches) notwendig. Folglich können die Positionierung und der eigentliche Füge- bzw. Schweißvorgang an Ort und Stelle mit hoher Präzision erfolgen. Dabei ist es insbesondere von Vorteil, wenn die Steuereinrichtung in einem Anfangsbereich des Trägers vorgesehen ist. Das Fügewerkzeug mit geringen Abmessungen kann folglich durch Öffnungen hindurch an unzugängliche Stellen verbracht werden.

Bei einer besonders bevorzugten Ausführungsform weist der längliche Träger zwei etwa parallel verlaufende Trägerarme auf, zwischen denen das Fügewerkzeug drehbar gelagert ist. Diese Ausführungsform hat zum einen den Vorteil, daß die Lagerung des Fügewerkzeuges mit räumlich hoher Präzision erfolgen kann. Ferner kann der zwischen den Trägerarmen verbleibende Raum für andere funktionelle Einheiten genutzt werden. Diese Einheiten sowie das Fügewerkzeug sind ferner zwischen den Trägerarmen geschützt angeordnet.

Von besonderem Vorzug ist es ferner, wenn die Drehachse quer zur Längsachse des Trägers ausgerichtet ist. Bei dieser Ausführungsform wird vorteilhafterweise erreicht, daß die Kreisbahn der Halteeinrichtung sich über das vorderste Ende des Trägers hinaus erstrecken kann. Demzufolge kann der Träger vergleichsweise kurz ausgebildet werden. Zum anderen wird erreicht, daß die Halteeinrichtung hin zu einem mittleren Bereich des Trägers verschwenkt werden kann und folglich hin zu anderen funktionellen Einheiten verbracht werden kann.

Insgesamt ist es daher ferner von Vorteil, wenn der Fügesystemkopf eine Zuführeinrichtung mit Übergabestation zum Zuführen von Elementen aufweist und wenn eine Ladeantriebseinrichtung dazu ausgelegt ist, die Halteeinrichtung bzw. das Fügewerkzeug hin zu der Übergabestation zu drehen. Dabei werden die Elemente nicht wie im Stand der Technik bis hin zu der Halteeinrichtung gefördert. Vielmehr erfolgt das Zuführen der Elemente zunächst nur bis zu der Übergabestation. Dieser Zuführschritt kann demgemäß erfolgen, während der Fügeschweißkopf selbst ein bereits zugeführtes Element auf ein Bauteil fügt. Durch diese Parallelverarbeitung lassen sich insgesamt kürzere Taktzeiten realisieren. Dabei ist es besonders bevorzugt, wenn die Übergabestation an dem Träger festgelegt ist.

Sofern die Übergabestation an dem länglichen Träger angeordnet ist, läßt sich relativ zu der Halteeinrichtung bzw. dem Fügewerkzeug eine feste Relativposition für die Übergabestation realisieren. Zudem ist von Vorteil, daß der Querschnitt des Trägers in der Regel kleiner ist als der Querschnitt des Fügewerkzeuges bzw. der Halteeinrichtung, so daß Bauraum für die Übergabestation zur Verfügung steht.

Gemäß einer Ausführungsform weist die Ladeantriebseinrichtung einen Drehmotor auf, der an dem Endbereich des Trägers angeordnet ist. Bei dieser Ausführungsform läßt sich eine präzise Steuerung des Fügewerkzeuges mit gutem Ansprechverhalten realisieren.

Bei einer alternativen Ausführungsform weist die Ladeantriebseinrichtung einen im Anfangsbereich des Halters angeordneten Drehmotor und ein Getriebe auf, das Bewegungen des Drehmotors auf die Halteeinrichtung überträgt. Bei dieser Ausführungsform ergibt sich ein verbesserter Störkantenfreiraum, da der störkantenrelevante Endbereich des Trägers keinen eigenen Motor zum Bewegen der Halteeinrichtung bzw. des Fügewerkzeuges aufweist. Vielmehr ist der vergleichsweise voluminöse Motor im Anfangsbereich des Trägers angeordnet und überträgt seine Bewegungen über ein Getriebe auf die Halteeinrichtung bzw. das Fügewerkzeug. Zudem lassen sich mit einem Drehmotor Bewegungen präzise und mit hohem Ansprechverhalten realisieren. Dabei ist es besonders bevorzugt, wenn das Getriebe ein Zugmittelgetriebe ist. Mit dem Zugmittelgetriebe lassen sich auf konstruktiv einfache Weise vergleichsweise große Distanzen zwischen dem Anfangsbereich des Trägers auf der einen Hand und dem Endbereich des Trägers auf der anderen Hand realisieren.

Insgesamt ist es bei einer bevorzugten Ausführungsform vorgesehen, daß die Ladeantriebseinrichtung und die Fügeantriebseinrichtung durch eine einzelne Drehantriebseinrichtung gebildet sind. Bei dieser Ausführungsform wird die Drehbarkeit der Halteeinrichtung nicht nur dazu verwendet, die Halteeinrichtung hin zu einer Übergabestation zum "Holen" eines Elementes zu verschwenken. Vielmehr wird die Halteeinrichtung zum Fügen eines gehaltenen Elementes nicht in einer Richtung senkrecht zur Drehachse, sondern entlang eines Umkreises um die Drehachse herum bewegt. Diese Ausrührungsform hat den besonderen Vorzug, daß ein axial langbauender Linearantrieb im Bereich der Halteeinrichtung, insbesondere im Endbereich des länglichen Trägers nicht notwendig ist. Vielmehr kann die Drehantriebseinrichtung, die die Ladeantriebseinrichtung und die Fügeantriebseinrichtung bildet, beispielsweise im Anfangsbereich des Trägers vorgesehen sein und ihre Bewegungen über ein Zugmittelgetriebe auf die Halteeinrichtung am Endbereich des Trägers übertragen.

Bei dieser Ausführungsform entsteht eine Art "reduziertes" Fügewerkzeug am vorderen Endbereich des Trägers, das im Grunde allein aus der Halteeinrichtung besteht. Bei dieser Ausführungsform ergibt sich folglich eine besonders geringe Störkantenrelevanz und somit die Möglichkeit, auch an besonders unzugänglichen Stellen Fügevorgänge durchzuführen.

Bei einer alternativen Ausrührungsform weist die Fügeantriebseinrichtung hingegen eine Linearantriebseinrichtung auf. Bei dieser Ausrührungsform wird die Halteeinrichtung zum Fügen folglich in klassischer Weise in einer geradlinigen Bewegung versetzt. Die Drehbarkeit der Halteeinrichtung um die Drehachse wird mittels der Ladeantriebseinrichtung dann vorzugsweise dazu verwendet, die Halteeinrichtung bzw. das Fügewerkzeug in eine beliebige Schweißstellung zu drehen und/oder Elemente von einer Übergabestation der Zuführeinrichtung zu "holen".

Sofern die Linearantriebseinrichtung einen elektrischen Linearmotor aufweist, werden nur relativ wenige Leitungen zur Ansteuerung benötigt. Die Halteeinrichtung ist dann in beiden Hubrichtungen regelbar. Bei dieser Ausführungsform ist es von besonderem Vorzug, wenn die Längsachse der Fügeantriebseinrichtung und die Längsachse der Halteeinrichtung voneinander parallel beabstandet sind. Hierbei ist es möglich, die Halteeinrichtung so zu positionieren, daß auch Schweißpositionen eng an Kanten realisierbar sind. Der Abstand der Längsachsen kann im Bereich einiger weniger Zentimeter liegen, gerade hinreichend, um die Halteeinrichtung aus der Projektion der Fügeantriebseinrichtung in Fügerichtung heraus zu versetzen.

Insgesamt ist es bei einer bevorzugten Ausführungsform vorgesehen, daß die Halteeinrichtung eine Mehrzahl von Backen aufweist, die um die Längsachse der Halteeinrichtung herum verteilt angeordnet sind und aufeinander zu und voneinander weg beweglich sind, um jeweils ein Element zu halten oder freizugeben. Dabei ist es besonders bevorzugt, wenn die Halteeinrichtung zwei Backen aufweist. Der Begriff "Backen" ist im vorliegenden Zusammenhang breit zu verstehen. Bei den Backen kann es sich beispielsweise auch um längliche Finger handeln. Mit zwei Backen lassen sich insbesondere rotationssymmetrische oder annähernd rotationssymmetrische Teile vergleichsweise günstig erfassen und sicher halten.

Bevorzugt ist es dabei, wenn die Backen soweit voneinander weg beweglich sind, daß die Halteeinrichtung das Element freigeben kann, indem sie schräg zur Fügerichtung von dem Element abgezogen wird. Diese Ausführungsform ermöglicht es, den Vorgang des "Wegfahrens" des Fügesystemkopfes von dem auf das Bauteil gefügten Element allein mittels des Roboters zu realisieren. Ein Schlitten zum Einrichten einer vollkommen geradlinigen Rückfahrbewegung ist dann nicht notwendig. Insofern trägt diese Ausführungsform auch zu einer geringen axialen Erstreckung des Schweißkopfes bei.

Besonders bevorzugt ist es jedoch, wenn die Backen soweit voneinander weg beweglich sind, daß die Halteeinrichtung das Element freigeben kann, indem sie um die Drehachse herum von dem Element weg verschwenkt wird. Bei dieser Ausführungsform lassen sich die Backen soweit voneinander weg bewegen, daß das Fügewerkzeug nicht in Fügerichtung weggefahren werden muß. Vielmehr ist es möglich, das Fügewerkzeug bzw. die Halteeinrichtung nach dem Fügevorgang quer, insbesondere senkrecht zu der Fügerichtung wegzufahren, wobei das Element zwischen den Backen der Halteeinrichtung hindurchtritt. Bei dieser Ausführungsform ist folglich keine Axialbewegung erforderlich.

Hierdurch ist es möglich, den Träger mit dem am vorderen Endbereich angeordneten Fügewerkzeug bzw. Halteeinrichtung auch durch kleinste Einrichtungen hindurch durchzuführen und innerhalb von Hohlräumen Fügevorgänge auszuführen. Der Träger kann nach dem Erreichen der Fügeposition nahezu unverändert positioniert bleiben. Nach dem Fügevorgang wird das Fügewerkzeug quer zur Fügerichtung weg verschwenkt und anschließend kann der Träger entlang seiner Längsachse wieder aus dem Hohlraum herausgefahren werden.

Auch ermöglicht diese Ausführungsform, daß sich die Elemente von der Übergabestation besonders einfach greifen lassen. Das Fügewerkzeug wird bei dieser Ausführungsform in einem Schritt so verschwenkt, daß die Halteeinrichtung bei freigegebenen Backen mit einem Element an der Übergabestation ausgerichtet wird Anschließend kann das Element von den Backen ergriffen und durch eine anschließende Schwenkbewegung aus der Übergabestation entnommen werden.

Insgesamt ist es dabei bevorzugt, wenn ein Backenaktuator vorgesehen ist, der die Backen aktiv öffnet und/oder schließt. Bei dieser Ausführungsform sind die Backen in der Regel als starre Finger ausgebildet. Der Backenaktuator sorgt dafür, daß die Bakken entweder aktiv geöffnet werden, um ein Element freizugeben, oder aber aktiv geschlossen werden, um das Element zu halten.

Alternativ hierzu ist es möglich, die Backen elastisch auszubilden oder elastisch zu lagern, derart, daß sie passiv aufeinander zu und/oder voneinander weg bewegbar sind. Hierbei können die Backen entweder aus einem elastischen Material ausgebildet sein. In diesem Fall erübrigen sich in der Regel weitere elastische Mittel. Alternativ können die Backen auch als starre Elemente ausgebildet sein und elastisch gelagert sein. Auch ist es im Rahmen dieser Ausführungsform möglich, daß die Backen entweder in Halteoder in Freigaberichtung elastisch vorgespannt sind. In diesem Fall ist in der Regel ein Aktuator vorgesehen, der die Backen in der jeweiligen anderen Richtung aktiv bewegt.

Bei dem erfindungsgemäßen Fügesystem ist es von Vorteil, wenn eine stationäre Vereinzelungseinrichtung vereinzelte Elemente hin zu der Zuführeinrichtung des Fügeschweißkopfes fördert. Diese Ausführungsform dient insgesamt einer Steigerung des Automatisierungsgrades. Solche stationären Vereinzelungs- und Zuführeinrichtungen sind an sich im Stand der Technik bekannt. Diese fördern vereinzelte Elemente jedoch in einem Schritt bis hin zu der Halteeinrichtung, wohingegen bei dem erfindungsgemäßen Fügesystem eine Förderung lediglich bis hin zu der Zuführeinrichtung (Übergabestation) erfolgt. Von dort "holt" sich die Halteeinrichtung ein dorthin gefördertes Element.

Ausführungsbeispiele der Erfindung sind in der Zeichnung dargestellt und werden in der nachfolgenden Beschreibung näher erläutert. Es zeigen:
- Fig. 1: eine schematische Ansicht eines erfindungsgemäßen Fügesystems;
- Fig. 2: eine alternative Ausgestaltung eines erfindungsgemäßen Fügesystemkopfes;
- Fig. 3: einen Längsschnitt durch eine Ausführungsform einer Halteeinrichtung;
- Fig. 4: einen Querschnitt entlang der Linie IV-IV in Fig. 3;
- Fig. 5: den Endbereich eines erfindungsgemäßen Fügesystemkopfes mit einer alternativen Ausgestaltung eines Fügewerkzeuges;
- Fig. 6: eine Ansicht des Endbereiches des Fügesystemkopfes der Fig. 5 von unten;
- Fig. 7: eine weitere alternative Ausführungsform eines Fügewerkzeuges eines erfindungsgemäßen Fügesystemkopfes;
- Fig. 8: eine schematische Darstellung einer Übergabestation eines erfindungsgemäßen Fügesystemkopfes;
- Fig. 9: eine schematische Darstellung einer alternativen Übergabestation eines erfindungsgemäßen Fügesystemkopfes;
- Fig. 10: eine schematische Darstellung einer weiteren alternativen Ausführungsform einer Übergabestation eines erfindungsgemäßen Fügesystemkopfes;
- Fig. 11: eine schematische Schnittansicht entlang der Linie XI-XI der Fig. 10; und
- Fig. 12: eine schematische Seitenansicht einer alternativen Ausführungsform eines erfindungsgemäßen Fügesystemkopfes.

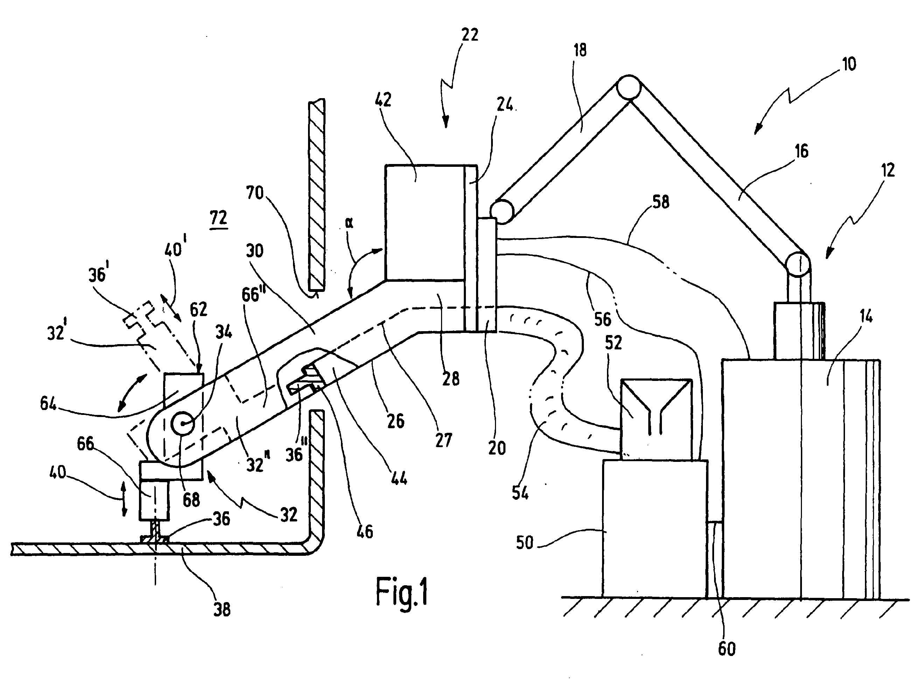

In Fig. 1 ist ein erfindungsgemäßes Fügesystem generell mit 10 bezeichnet. Das Fügesystem 10 weist einen Roboter 12 auf. Der Roboter 12 beinhaltet eine stationäre Basis 14, von der aus sich zwei gelenkig miteinander verbundene Arme 16, 18 erstrecken. Am Ende des Arms 18 ist ein Flansch 20 vorgesehen. An dem Flansch 20 ist ein Fügesystemkopf angebracht, der in Fig. 1 generell mit 22 bezeichnet ist. Der Fügesystemkopf 22 weist eine Grundplatte 24 auf, die an dem Flansch angebracht ist. Von der Grundplatte 24 aus erstreckt sich ein länglicher Träger 26. Der längliche Träger 26 weist einen ersten kurzen Tragabschnitt 28 und einen sich daran anschließenden zweiten länglichen Tragabschnitt 30 auf Der zweite Tragabschnitt 30 ist gegenüber dem ersten Tragabschnitt 28 um einen Winkel α von 120° abgewinkelt. Der Winkel α liegt vorzugsweise zwischen 60 und 80° bzw. 100 und 120°.

Generell ist es jedoch auch denkbar, daß der erste Tragabschnitt 28 und der zweite Tragabschnitt 30 auf einer Achse miteinander ausgerichtet sind. Die Achse des zweiten Tragabschnittes 30 ist in Fig. 1 mit 27 bezeichnet. An dem Ende des zweiten Tragabschnittes 30 ist ein Fügewerkzeug 32 um eine Drehachse 34 drehbar gelagert. Die Drehachse 34 verläuft senkrecht zur Achse 27 des zweiten Tragabschnittes 30 und ist in der dargestellten Ausführungsform etwa parallel mit der Grundplatte 24 ausgerichtet. Das Fügewerkzeug 32 dient dazu, ein Element, insbesondere einen Schweißbolzen 36, auf ein Bauteil, insbesondere ein Blech 38, zu schweißen.

Obgleich das Fügesystem von der Konstruktion her für eine Vielzahl von Fügearten verwendbar ist, ist eine Ausgestaltung des Fügesystems als Bolzenschweißsystem bzw. Kurzzeit-Lichtbogenschweißsystem mit Hubzündung besonders bevorzugt. Im folgenden wird daher ohne Verlust an Allgemeingültigkeit das Fügesystem als Bolzenschweißsystem und der Fügesystemkopf 22 als Bolzenschweißkopf bezeichnet. Das Fügewerkzeug 32 wird als Schweißwerkzeug 32 bezeichnet. Das Schweißwerkzeug 32 schweißt die Bolzen 36 in einer Linearbewegung (Fügerichtung 40) auf das Bauteil 38.

Der Schweißkopf 22 weist ferner eine Steuereinrichtung 42 auf Die Steuereinrichtung 42 ist am Anfangsbereich des länglichen Trägers 26 vorgesehen und ist in der dargestellten Ausführungsform auf dem ersten Tragabschnitt 28 montiert, und zwar benachbart zu der Grundplatte 24. Die Steuereinrichtung 42 dient zum Antrieb des Fügewerkzeuges 32 sowie als Schnittstelle zu übergeordneten Steuervorrichtungen.

Der Schweißkopf 22 weist ferner eine Zuführeinrichtung 44 auf Die Zuführeinrichtung 44 dient dazu, Bolzen mit dem Schaft voraus von einem Zuführschlauch zu übernehmen und an einer Übergabestation 46 bereitzustellen. Die Zuführeinrichtung 44 ist demzufolge im wesentlichen als Rohr oder Schlauch ausgebildet und erstreckt sich entlang des länglichen Trägers 26. Die Übergabestation 46 liegt in einem mittleren Bereich des zweiten Tragabschnittes 30. In ihr wird jeweils ein Element zur Übergabe an das Schweißwerkzeug 32 bereitgestellt. Dieses Element ist in Fig. 1 mit 36" bezeichnet.

Das Schweißsystem 10 weist ferner eine stationäre Basisstation 50 auf Die Basisstation 50 dient dazu, dem Schweißkopf 22 Energie zum Schweißen bereitzustellen, und dient als übergeordnete Steuervorrichtung. Die Basisstation 50 ist mit einer Vereinzelungsvorrichtung 52 verbunden. Die Vereinzelungsvorrichtung 52 dient dazu, Bolzen, die in der Regel als Schüttgut geliefert werden, zu vereinzeln und über einen Schlauch 54 zu der Zuführeinrichtung 44 einzeln zu fördern Zu diesem Zweck weist die Vereinzelungsvorrichtung 52 in der Regel ein Druckluftaggregat auf, um die Elemente 36 pneumatisch fördern zu können.

Ferner ist in Fig. 1 eine Leitung 56 gezeigt, die die Basisstation 50 mit dem Schweißkopf 22 verbindet. Die Leitung 56 ist in der Regel als Leitungssystem realisiert und beinhaltet Leitungen zum Führen des Schweißstromes, Steuerleitungen etc.

Ferner ist in Fig. 1 eine Leitung 58 gezeigt, die den Schweißkopf 22 mit der Basis 14 des Roboters 12 verbindet. Die Leitung 58 ist optional vorgesehen und beinhaltet eine oder mehrere Steuerleitungen. Mittels der Steuerleitungen 58 können die Bewegungen des Roboters 12 mit jenen des Schweißwerkzeuges 32 abgestimmt werden.

Alternativ oder zusätzlich ist die Basis 14 des Roboters 12 mit der Basisstation 50 über eine Leitung 60 verbunden. Demzufolge ist es auch möglich, daß die Abstimmung zwischen Roboter 12 und Schweißkopf 22 über die Leitungen 60, 56 erfolgt.

Die Leitungen 56, 58 werden zu der Steuereinrichtung 42 geführt, von der sie teilweise zu dem Schweißwerkzeug 32 durchgeschleift werden (zur Energieversorgung der dortigen Aggregate), teilweise unmittelbar verwendet werden.

Das Schweißwerkzeug 32 weist ein Gehäuse 62 auf, das an der Drehachse 34 drehbar gelagert ist. An dem Gehäuse 62 ist eine Fügeantriebseinrichtung 64 in Form eines Linearmotors 64 vorgesehen. Der Linearmotor 64 dient dazu, eine von dem Gehäuse 62 vorstehende Halteeinrichtung 66 zum Halten jeweils eines Bolzens 36 senkrecht zur Drehachse 34 zu bewegen. Der Linearmotor 64 bildet folglich eine Hubvorrichtung zum Vollziehen der Hub- und Tauchbewegungen im Rahmen eines Bolzenschweißvorganges, wie er einleitend beschrieben wurde.

Ferner ist an dem Endbereich des zweiten Tragabschnittes 30 ein Drehantrieb 68 vorgesehen, der dazu dient, das Schweißwerkzeug 32 gesteuert in beliebige Winkelstellungen in bezug auf den zweiten Tragabschnitt 30 zu verdrehen. Der Drehumfang beträgt typischerweise mindestens 270°, in der Regel 360°.

Der Drehantrieb 68 dient einerseits dazu, das Schweißwerkzeug 32 in eine jeweils geeignete Schweißposition zu drehen, von denen eine in Fig. 1 in durchgezogenen Linien gezeigt ist. Eine alternative Schweißposition ist durch Strichpunktlinien bei 32' angedeutet. In der weiteren Schweißposition wird das Schweißwerkzeug 32' entlang einer Schweißrichtung 40' dazu benutzt, einen Bolzen 36' auf ein nicht näher dargestelltes Bauteil zu schweißen.

Ferner dient der Drehantrieb 68 als Ladeantriebseinrichtung. Zu diesem Zweck wird das Schweißwerkzeug 32 in eine Position verdreht, die in Fig. 1 gestrichelt dargestellt ist. In dieser Position ist die Halteeinrichtung 66" fluchtend mit der Übergabestation 46 ausgerichtet und kann in dieser Position einen dort bereitstehenden Bolzen 36" ergreifen und für einen darauffolgenden Schweißvorgang übernehmen.

Obgleich in der dargestellten Ausführungsform die Ladeantriebseinrichtung allein durch den Drehantrieb 68, beispielsweise einen Elektromotor, gebildet ist, sind auch Varianten hiervon denkbar. So kann die Ladeantriebseinrichtung beispielsweise dadurch gebildet werden, daß das - nicht drehbare - Schweißwerkzeug 32 an dem Träger 26 in Längsrichtung verschoben wird, um ein Beispiel zu nennen. Es versteht sich, daß dann die Übergabestation 46 an entsprechend anderer Stelle angeordnet werden müßte.

Es ist leicht erkennbar, daß das Schweißwerkzeug 32 mit sehr geringen Abmessungen ausgebildet werden kann. Zum einen ist das Schweißwerkzeug 32 von der Steuereinrichtung 42 räumlich getrennt.. Zum anderen ist das Schweißwerkzeug 32 von der pneumatischen Bolzenzuführeinrichtung entkoppelt. Das heißt, an dem Schweißwerkzeug 32 müssen keine pneumatischen oder hydraulischen Leitungen angeflanscht werden. Die elektrische Versorgung des Linearmotors 64 und/oder des Drehantriebs 68 ist vergleichsweise leicht zu realisieren. Gleiches gilt für die Betätigung der Halteeinrichtung 66, sofern diese aktiv elektrisch betätigt wird.

Dadurch, daß die Bolzen 36 in die Halteeinrichtung 66 nicht von hinten, sondern von vorne eingesetzt werden, ist kein Ladestift wie im Stand der Technik notwendig. Das Schweißwerkzeug 32 kann daher in axialer Richtung kurz bauen.

Es versteht sich, daß anstelle eines Linearmotors als Fügeantriebseinrichtung 64 auch eine Kombination aus einer Feder und einem Hubmagneten vorgesehen sein kann.

Ferner versteht sich, daß der Drehantrieb 68 als elektrischer Schrittmotor mit einer Genauigkeit von < 1°, besser noch 0,5°, ausgebildet sein kann.

Die Parametervorgaben zur Drehbewegung sind zum einen schweißprogrammbezogen und zum zweiten roboterbewegungsprogrammbezogen Jede Schweißposition hat ihr eigenes Schweißprogramm und ihr eigenes Roboterbewegungsprogramm. Durch den Bezug der Parameterdaten auf die einzelnen Schweiß- und Roboterbewegungsprogramme wird sichergestellt, daß erstens der Bolzen 36 immer senkrecht zur Oberfläche des Bauteils 38 steht, und daß zweitens das Schweißwerkzeug 32 bei der Roboterbewegung in einer Lage ist, die dem Roboter einen größtmöglichen Bewegungsfreiraum auf dem Weg zur Schweißposition gibt. Die Steuerung der Drehbewegung des Schweißwerkzeuges 32 kann über die Basisstation 50 und/oder über die Basis 14 des Roboters 12 erfolgen.

Das schräge Abwinkeln des zweiten Tragabschnittes 30 in bezug auf den ersten Tragabschnitt 28 bietet zum einen einen verbesserten Störkantenfreiraum. Zum zweiten läßt sich die Zuführeinrichtung 44 leichter realisieren, da die Bolzen, wie gezeigt, durch Schwerkraft und/oder Blasluft an der Übergabestation 46 gehalten werden.

In Fig. 1 ist ferner gezeigt, daß das Bauteil 38 als Winkelbauteil mit einer relativ kleinen Öffnung 70 ausgestaltet ist. Gesehen von dem Roboter 12 aus befindet sich die gewünschte Schweißposition im Inneren eines Hohlraumes 72.

Es ist leicht zu erkennen, daß das erfindungsgemäße Bolzenschweißsystem 10 ganz besonders gut dazu geeignet ist, diese Aufgabe zu erfüllen. Zum Einführen des zweiten Tragabschnittes 30 durch die Öffnung 70 kann das Schweißwerkzeug 32 in eine Stellung verdreht werden, in der es weitgehend mit dem zweiten Tragabschnitt 30 fluchtet, beispielsweise der Position 32" in Fig. 1. Nach dem Einführen in den Hohlraum 72 wird das Schweißwerkzeug 32 in die mit durchgezogenen Linien gezeigte Schweißposition verdreht. Zuvor wird ein Bolzen 36 von der Übergabestation 46 übernommen, so daß er sich in der Halteeinrichtung 66 befindet. Anschließend wird in an sich herkömmlicher Weise ein Bolzenschweißvorgang durchgeführt, wie er einleitend erläutert wurde.

Wie nachstehend noch im Detail ausgeführt werden wird, ist die Halteeinrichtung 66 vorzugsweise so ausgebildet, daß sie den angeschweißten Bolzen 36 in einer Richtung quer zur Schweißrichtung 40 freigeben kann. Demzufolge ist es möglich, das Fügewerkzeug 32 unmittelbar nach dem Schweißen wieder in die fluchtende Position 32" zu verdrehen, ohne daß der zweite Tragabschnitt 30 eine Bewegung in Schweißrichtung 40 vollziehen muß. Sobald die fluchtende Stellung 32" erreicht ist, kann der zweite Tragabschnitt 30 wieder durch die Öffnung 70 herausgezogen werden. Der Roboter 12 führt den Schweißkopf 22 dann zur nächsten Schweißposition.

Die Drehachse 34 bildet für den Roboter 12 eine weitere Roboter-Drehachse. Die Positionierung an einer Schweißposition kann folglich einfacher erfolgen. Dies gilt um so mehr, als die weitere Drehachse nahe an der Schweißposition liegt.

Ein weiterer Vorteil des erfindungsgemäßen Schweißsystems 10 ergibt sich folgendermaßen. Im Stand der Technik war der Schweißkopf insgesamt störkantenrelevant. Daher hat man im Stand der Technik an dem Schweißkopf keine pneumatischen Ventile vorgesehen. Dies bedingte jedoch eine sehr komplizierte Verkabelung zwischen der Basisstation 50 und dem Schweißkopf 22.

Durch die räumliche Trennung der Steuereinrichtung 42 von dem Schweißwerkzeug 32 an dem Schweißkopf 22 ist die Steuereinrichtung 42 selbst nicht störkantenrelevant. Folglich lassen sich in die Steuereinrichtung 42 am Schweißkopf 22 Ventile integrieren, so daß die Anzahl und Komplexität der Zuführleitungen reduziert werden kann. Da die Steuereinrichtung 42 an dem Schweißkopf 22 vorgesehen ist, ist keine aufwendige elektrische Verkabelung zwischen Schweißkopf 22 und Basisstation 50 notwendig. Beispielsweise ist es möglich, daß die Zuführleitungen 56 in einem Schlauchpaket lediglich enthalten ein Schweißkabel, zwei Hilfsspannungsversorgungen für den Linearmotor sowie eine 24-Volt-Versorgung für die Steuereinrichtung, zwei Lichtwellenleiter zur seriellen Übertragung von Steuer- und Meßdaten, sowie den Zuführschlauch 54. In einer erweiterten Version könnte das Schlauchpaket auch ergänzt werden durch eine Schutzgaszuleitung bzw. eine Blas-/Saugleitung, beispielsweise zur Farbmarkierung. Das Schlauchpaket kann folglich weniger schwer, weniger verwindungssteif und folglich sicherer sein.

Ferner wird durch die Entkopplung von Zuführeinrichtung 44 und Schweißwerkzeug 32 ermöglicht, daß die Bolzen 36 parallel zu dem Bolzenschweißprozeß zur Übergabestation 46 zugeführt werden können.

Im Stand der Technik erfolgen das Bolzenzuführen und das Bolzenschweißen rein seriell. Daher sind Zykluszeiten von < 1 sec nur sehr schwer und unter speziellen Randbedingungen zu erreichen.

Erfindungsgemäß kann unmittelbar nach dem Übernehmen eines Bolzens von der Übergabestation 46 zum Einleiten eines Bolzenschweißvorganges ein weiterer Bolzen von der Vereinzelungsvorrichtung 52 über den Schlauch 54 und die Zuführeinrichtung 44 zu der Übergabestation 46 gefördert werden. Dies kann erfolgen, während das Schweißwerkzeug 32 einen Bolzenschweißvorgang ausführt.

Ferner kann bei der Bewegung des Trägers 26 von einer Schweißposition zur nächsten das Schweißwerkzeug 32 zur Übergabestation 46 verschwenkt und anschließend in die richtige Stellung für die neue Schweißposition verschwenkt werden. Auch durch diese Parallelität wird insgesamt erreicht, daß Schweißzykluszeiten von deutlich kleiner als 1 sec erreichbar sind.

Obgleich als zu schweißende Elemente dem Grunde nach beliebige Formen in Frage kommen, so sind doch mittels Druckluft zuführbare Elemente, insbesondere rotationssymmetrische Elemente, besonders dazu geeignet, mit dem erfindungsgemäßen Fügesystem bearbeitet zu werden.

Die weitere Schweißposition 32' kann beispielsweise eine Überkopfposition sein, wie die gezeigte Position 32'. Diese kann erreicht werden, ohne den Träger 26 drehen zu müssen. Hierdurch werden Beanspruchungen der Zuführkabel und -schläuche vermieden.

In der folgenden Beschreibung von Details und Abwandlungen des in Fig. 1 gezeigten Fügesystems werden gleiche und ähnliche Elemente mit den selben Bezugsziffern bezeichnet. Bei identischer Bezeichnung ist generell von einer gleichen oder ähnlichen Funktionsweise auszugehen, es sei denn, nachstehend ist ausdrücklich anderes vermerkt. Soweit auf einzelne Elemente des Fügesystems eingegangen wird, ist davon auszugehen, daß die Funktion im übrigen identisch oder ähnlich ist zu der Funktion des Fügesystems 10 der Fig. 1. Ferner versteht sich, daß folgende Bezugnahmen auf Schweißsysteme, -köpfe oder -werkzeuge sich auf derartige Elemente zum Fügen allgemein beziehen sollen, beispielsweise auch auf Niet- oder Klebeprozesse.

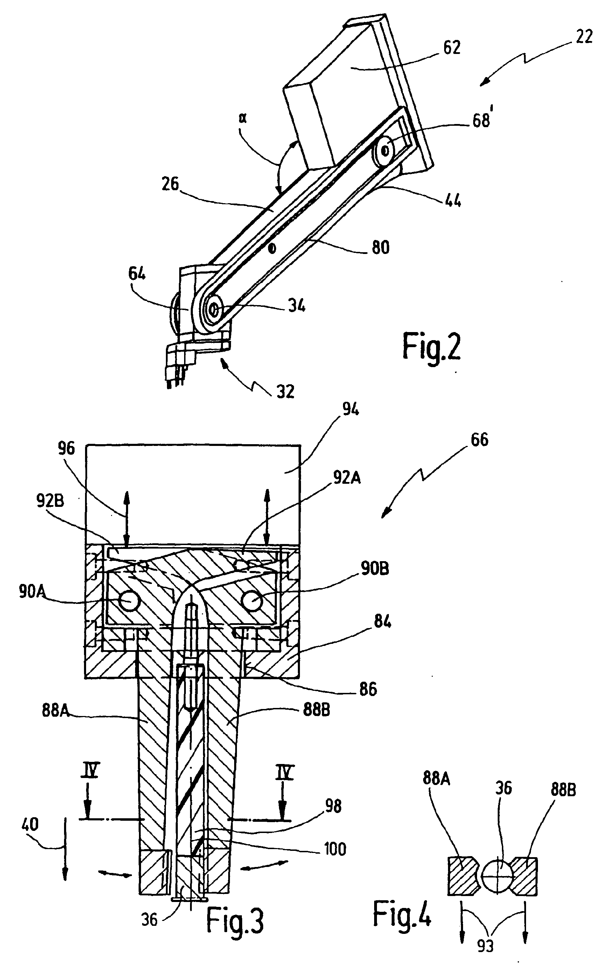

In Fig. 2 ist eine alternative Ausführungsform eines Schweißkopfes 22 gezeigt. Im Unterschied zu dem Schweißkopf 22 der Fig. 1 ist ein Drehantrieb 68' zum Drehen des Schweißwerkzeugs 32 nicht im Endbereich des zweiten Tragabschnittes 30 vorgesehen, sondern im Bereich der Steuereinrichtung 42. Die Drehbewegungen des Drehantriebes 68' werden mittels eines Riemenantriebes 80 auf das Schweißwerkzeug 32 übertragen. Der Riemenantrieb 80 verläuft entlang des länglichen Trägers 26. Der längliche Träger 26 ist in der Darstellung der Fig. 2 durch zwei parallele Arme gebildet, zwischen deren Endbereichen das Schweißwerkzeug 32 drehbar gelagert ist.

In den Fig. 3 und 4 ist eine Ausführungsform einer Halteeinrichtung 66 dargestellt. Die Halteeinrichtung 66 weist ein Gehäuse 84 auf, das eine nach unten in Fügerichtung hin weisende Öffnung 86 aufweist. Die Halteeinrichtung 66 weist zwei an dem Gehäuse 84 begrenzt verschwenkbar gelagerte Backen 88A, 88B auf, die aus einem im wesentlichen unelastischen Material gebildet sind. Die Backen 88A, 88B bilden eine Spannzange, indem ein Element 36 zwischen den Enden der Backen 88A, 88B mit einer vorbestimmten Kraft eingeklemmt werden kann. Die Backen 88A, 88B sind jeweils einstückig mit einem Hebelabschnitt 92A, 92B verbunden. In bezug auf Achsen 90A, 90B, an denen die Backen 88A, 88B gelagert sind, erstrecken sich die Hebelabschnitte 92A, 92B in die jeweils andere Richtung. Die Hebelabschnitte 92A, 92B sind dabei gegenüber der Fügerichtung 40 so abgebogen, daß sie sich überschneiden. Durch Druck auf die Hebelabschnitte 92A, 92B von oben (in der Darstellung der Fig. 3) werden die Backen 88A, 88B folglich voneinander weg bewegt, um den Bolzen 36 freizugeben. Dies ist für den Backen 88A in Fig. 3 dargestellt. Man erkennt, daß der Backen 88A den Bolzen 36 in Richtung quer zur Fügerichtung 40 (also in Fig. 3 aus der Papierebene heraus) vollständig freigibt. Demzufolge kann die Halteeinrichtung 66 bei geöffneten Backen 88A, 88B quer zur Fügerichtung 40 und senkrecht zur Ebene der Backen 88A, 88B bewegt werden, ohne den Bolzen 36 zu berühren. Die Bewegungsrichtung der Backen 88A, 88B bei diesem Vorgang ist in Fig. 4 mit 93 bezeichnet.

Zum Betätigen der Hebelabschnitte 92A, 92B ist ein Aktuator 94 vorgesehen, der vorzugsweise elektrisch angesteuert wird. Der Aktuator 94 öffnet und schließt die Backen 88A, 88B jeweils aktiv. Es versteht sich, daß der Aktuator 94 zu diesem Zweck als bidirektionaler Antrieb ausgebildet sein muß.

Die aktive Betätigung der Backen 88A, 88B hat den Vorteil, daß der Bolzen 36 mit einer definierten Kraft (z.B. 20 N) gehalten werden kann. Die Herleitung der Spannkraft aus der Elastizität der einzelnen Finger der Spannzange des Standes der Technik entfallt. Folglich läßt sich eine deutlich höhere Lebensdauer erzielen. Die Betätigungsrichtung des Aktuators 94 ist in Fig. 3 bei 96 gezeigt.

An ihren Enden sind die Backen 88A, 88B so ausgeformt, daß sie den jeweiligen Bolzen 36 sicher ergreifen können. Hierzu kann es sinnvoll sein, geeignete Aufsätze auf die Backen 88A, 88B aufzusetzen, die an unterschiedliche Bolzen 36 angepaßt sein können.

Von der Unterseite des Gehäuses 94 erstreckt sich, wie es in Fig. 3 gezeigt ist, ein Positionierstift 98. Der Positionierstift bzw. Anschlagstift 98 ist starr mit dem Gehäuse 84 verbunden. Er dient dazu, bei Übernahme eines Bolzens 36 von der Übergabestation 46 zu gewährleisten, daß der Bolzen 36 in bezug auf die Halteeinrichtung 66 eine definierte Position einnimmt, und als Anschlag, um beim Schweißen die Axialkräfte aufzunehmen.

Der bidirektionale aktive Aktuator kann gebildet sein durch +

einen pneumatischen oder hydraulischen Antrieb. Vorzugsweise ist er jedoch gebildet durch eine Kombination von zwei Elektromagneten oder durch einen ungeregelten Linearmotor nach dem Prinzip 'bewegte Spule' oder 'bewegter Dauermagnet'.

Ferner ist es möglich, den Aktuator 94 semi-aktiv auszubilden. Dabei erfolgt das Öffnen der Backen 88A, 88B beispielsweise durch einen Elektromagneten. Wenn dieser abgeschaltet wird, sorgen geeignet angeordnete Federn dafür, daß ein Bolzen 36 mit einer definierten Kraft von den Backen 88A, 88B ergriffen wird.

Zum Schweißen werden die Backen 88A und/oder 88B mit Schweißstrom versorgt, der auf den Bolzen 36 geleitet wird. Die definierte Kraft sorgt für einen sicheren, verschleißarmen Stromübergang. Aus diesem Grund versteht sich, daß die Backen 88A, 88B aus einem leitenden Metall hergestellt sind. Der Positionierstift 98 hingegen sollte nichtleitend ausgebildet oder gegen das Gehäuse 84 isoliert ausgebildet sein.

Alternativ zu einer aktiven oder semi-aktiven Halteeinrichtung 66 ist es auch möglich, Backen vorzusehen, die elastisch ausgebildet sind und die ein seitliches Einführen des Bolzens 36 zwischen sich (entlang der Richtung 93) ermöglichen und die bei einer Bewegung quer zu einem angeschweißten Bolzen 36 diese ohne wesentliche Kraftausübung freigeben.

In Fig. 3 ist die Längsachse der Halteeinrichtung 66 mit 100 bezeichnet.

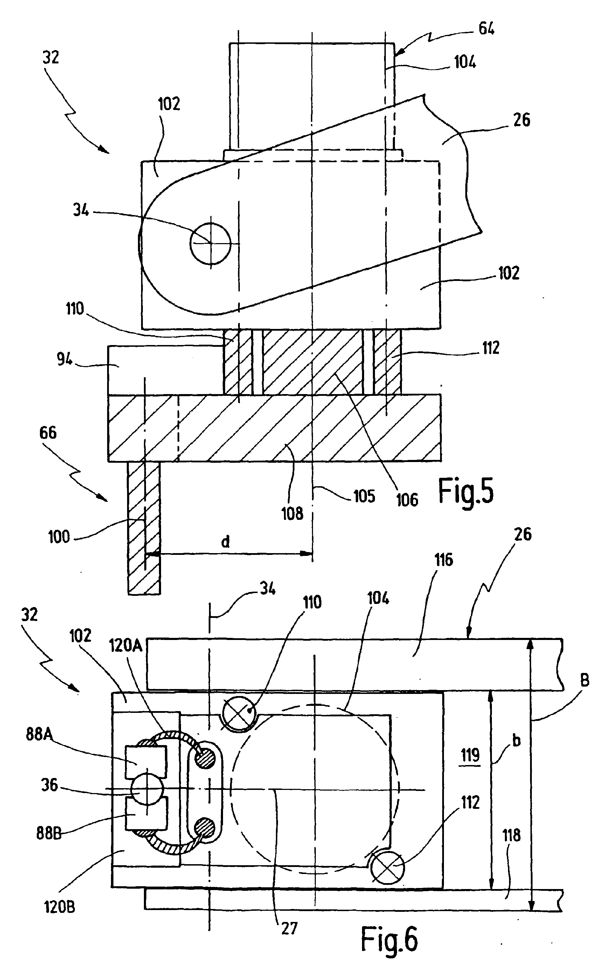

In den Fig. 5 und 6 ist eine weitere alternative Ausführungsform eines Schweißwerkzeuges 32 gezeigt.

Das Schweißwerkzeug 32 weist ein Werkzeuggehäuse 102 auf, an dem ein Linearmotor 104 einer Fügeantriebseinrichtung 64 festgelegt ist. Die Achse bzw. Mittenachse des Linearmotors 104 ist bei 105 gezeigt. Es ist dargestellt, daß die Achse 100 der Halteeinrichtung 66 und die Achse 105 des Linearmotors 104 um einen Abstand d voneinander beabstandet sind. Hierdurch wird die Halteeinrichtung 66 aus der Projektion des Linearmotors 104 in Fügerichtung heraus versetzt. Dadurch ist es möglich, die Halteeinrichtung 66 und folglich einen gehaltenen Bolzen 36 näher an einer Kante bzw. einer störenden Wand zu positionieren. Insgesamt wird hierdurch die Flexibilität des Schweißkopfes 22 erhöht.

Der Linearmotor 104 weist einen Ankerabschnitt 106 auf, der mit einer quer zur Fügerichtung verlaufenden Führungsplatte 108 verbunden ist. Von der Führungsplatte 108 erstrecken sich ferner zwei diagonal in bezug auf den Linearmotor 104 angeordnete Führungsstangen 110, 112. Die Führungsstangen 110, 112 sorgen dafür, daß die Führungsplatte 108 verkantungsfrei geführt wird.

Von der Unterseite der Führungsplatte 108 erstreckt sich die Halteeinrichtung 66. Ein Aktuator zur Betätigung der Halteeinrichtung 66 kann beispielsweise an der Oberseite der Führungsplatte 108 oder darin integriert ausgebildet sein.

In Fig. 6 ist gezeigt, daß der Träger 26 aus einem vergleichsweise massiven Tragarm 116 und einem parallel hierzu verlaufenden, weniger massiven Spannarm 118 gebildet ist. Das Schweißwerkzeug 32 ist zwischen den Armen 116, 118 entlang der Drehachse 34 drehbar gelagert.

In Fig. 6 sind ferner Stromkabel 120 zum Zuführen von Strom zu den Backen 88A, 88B angedeutet.

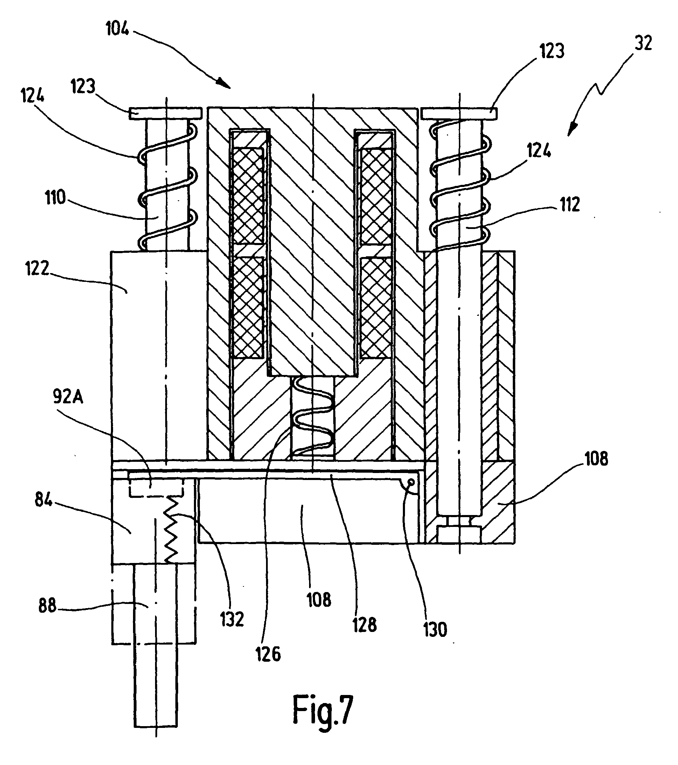

Eine weitere alternative Ausgestaltung eines Fügewerkzeuges 32 ist in Fig. 7 gezeigt. Das Schweißwerkzeug 32 weist ein Linearmotorgehäuse 122 auf. An den Oberseiten der Führungsstangen 110, 112 sind jeweils Flansche 123 vorgesehen. Zwischen den Flanschen 123 und dem Linearmotorgehäuse 122 sind Druckfedern 124 angeordnet, die um die Führungsstangen 110, 112 herum ausgebildet sind. Der Linearmotor 104 ist durch die Druckfedern 124 folglich so vorgespannt, daß sich die damit bewegte Führungsplatte 108 in der zurückgezogenen, also nicht ausgefahrenen Position befindet. Zusätzlich zu den Druckfedern 124 oder alternativ hierzu kann im Inneren des Linearmotorgehäuses 122 eine weitere Druckfeder 126 vorgesehen sein.

Ferner ist gezeigt, daß an der Oberseite der Führungsplatte 108 ein Klappmagnet 128 an einer Achse 130 angelenkt ist. Der Klappmagnet 128 dient dazu, die Hebelabschnitte 92A, 92B nach unten zu drücken, um die Backen 88 zu öffnen. Generell sind die Hebelabschnitte 92 jedoch mittels einer Spannfeder 132 in Richtung der Schließstellung der Backen 88 vorgespannt.

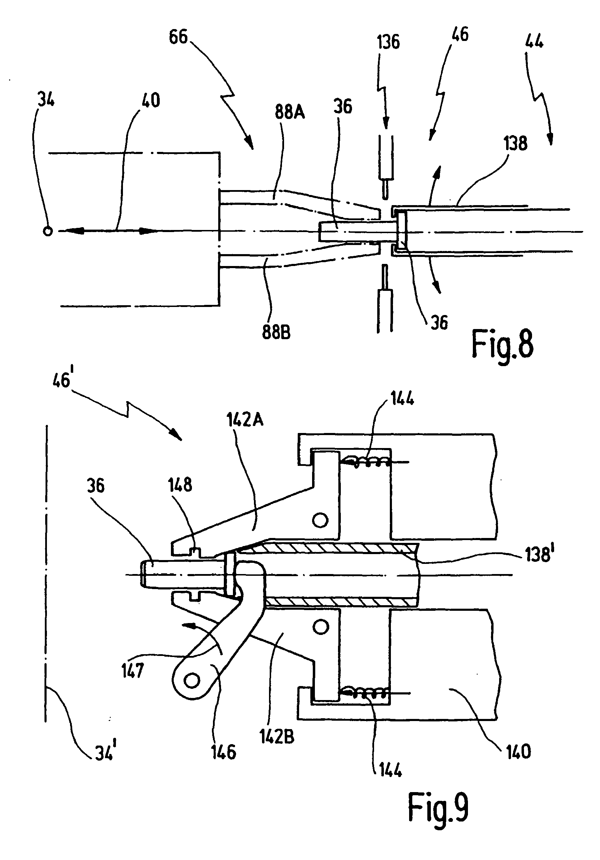

In Fig. 8 ist eine erste Ausführungsform einer Übergabestation 46 der Zuführeinrichtung 44 gezeigt. An der Übergabestation 46 sind zwei gegenüberliegende Sensoren 136 (beispielsweise eine Lichtschranke) vorgesehen, die erfassen, ob sich ein Bolzen 36 in der Übergabestation 46 befindet oder nicht. Die Zuführeinrichtung 44 ist im wesentlichen durch ein Rohr bzw. einen Schlauch 138 gebildet, der im Bereich der Übergabestation 46 nach innen abgebogen ist. Die Bolzen 36 werden mit dem Schaft voran aus der Vereinzelungsvorrichtung 52 durch die Zuführeinrichtung 44 hindurch zugefördert. Folglich schlägt der Kopf des Bolzens 36 an der Einbördelung des Rohrs 138 an und bleibt so in der Übergabestation 46. Dabei erstreckt sich der Schaft des Bolzens 36 aus dem Rohr 138 heraus.

Die Halteeinrichtung 66 kann nunmehr mit geöffneten Backen 88A, 88B hin zu dem Bolzen 36 geführt werden und den Bolzen 36 ergreifen. Anschließend wird die Halteeinrichtung 66 wieder zurückverschwenkt, in der Darstellung der Fig. 8 aus der Papierebene heraus. Es versteht sich, daß an der Übergabestation 46 eine geeignete seitliche Ausnehmung in dem Rohr 138 vorgesehen sein muß, die in Fig. 8 nicht näher dargestellt ist.

Eine alternative Ausführungsform einer Übergabestation 46' ist in Fig. 9 gezeigt. Bei dieser Ausführungsform ist ein Rohr 138' der Zuführeinrichtung 44' zum Ende hin offen. An einem Übergabegehäuse 140 sind zwei Spannbacken 142 drehbar gelagert.

Die Spannbacken 142 sind mittels zweier Federn 144 in eine Position vorgespannt, bei der ihre Innenseiten den Austritt eines Bolzens 36 aus dem Rohr 138' versperren. Der Bolzen 36 wird bei einer Zuförderung hierdurch abgebremst. Dabei ist ein Positionierhebel 146 aus der in Fig. 9 gezeigten Darstellung seitlich verschwenkt, um den Bolzen 36 durchzulassen. Anschließend wird der Positionierhebel 146 verschwenkt, wie es bei 147 gezeigt ist. Hierdurch drückt der Bolzen 36 die Spannbacken 142A, 142b auseinander und wird von dem Rohr 138' weg versetzt, bis der Kopf des Bolzens 36 in eine Ringausnehmung 148 schnappt. Die Ringausnehmung 148 ist durch die Innenseiten der Spannbacken 142A, 142B gebildet. In dieser Position wird der Bolzen 36 definiert mit einer bestimmten Kraft gehalten. Die Halteeinrichtung 66 kann, wie in der Fig. 8, den Schaft des Bolzens 36 ergreifen und diesen seitlich aus der Ringausnehmung 148 herausziehen.

Gegenüber der Ausführungsform der Fig. 8 hat diese Ausführungsform den Vorteil, daß der Bolzen 36 sich in der Übergabestation 46' in einer definierten Lage befindet und mit einer definierten Kraft gehalten wird, so daß ein sicheres Ergreifen des Bolzens 36 mittels der Halteeinrichtung 66 gewährleistet ist. Es versteht sich, daß auch bei der Übergabestation 46' geeignete Sensoren zur Erfassung eines Bolzens 36 in der Übergabeposition vorgesehen sein können.

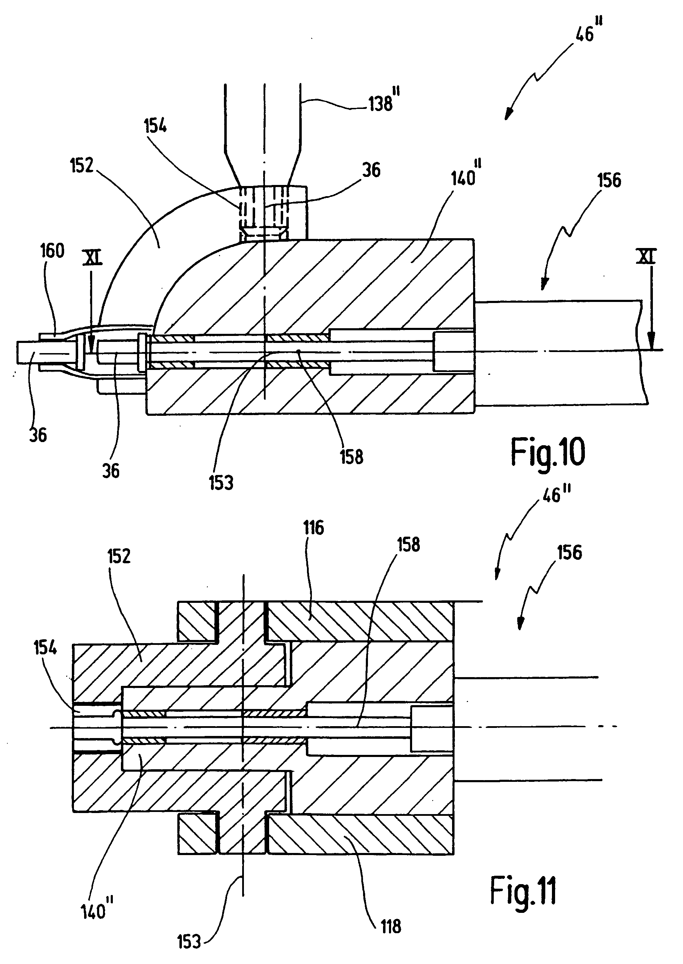

Eine dritte Ausführungsform einer Übergabestation 46" ist in den Fig 10 und 11 dargestellt Bei dieser Ausführungsform werden die Bolzen 36 über ein Rohr 138" in eine Bolzenaufnahme 154 eines verschwenkbaren Rotationssegmentes 152 gefördert. Das Rotationssegment 152 ist um eine Rotationsachse 153 drehbar, die quer zur Achse des Rohrs 138" und quer zur Ausrichtung des Bolzens 36 in der Übergabeposition ausgerichtet ist.

In den Fig. 10 und 11 befindet sich das Rotationssegment 152 in einer Übergabeposition. In dieser Position dient ein Pneumatikzylinder 156 dazu, den Bolzen 36 mittels eines Stößels 158 zwischen zwei Spannbacken 160 zu drücken, zwischen denen der Bolzen 36 dann definiert gehalten wird. Anschließend wird das Rotationssegment 152 zurück verdreht, um einen weiteren Bolzen 36 in der gestrichelt gezeigten, mit dem Rohr 138" fluchtenden Aufnahmeposition aufzunehmen. Diese Ausführungsform hat den Vorteil, daß die Bolzen 36 mit hoher Geschwindigkeit durch das Rohr 138" zugefördert werden können. Somit lassen sich kurze Taktzeiten erzielen.

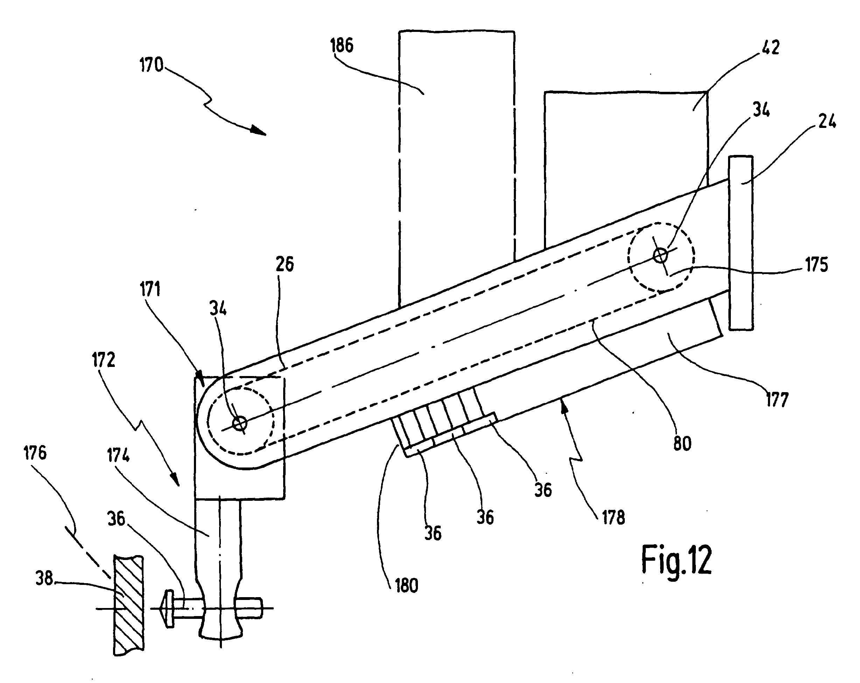

Eine weitere Ausführungsform eines erfindungsgemäßen Schweißkopfes ist in Fig. 12 generell mit 170 bezeichnet. Der Schweißkopf 170 weist am vorderen Ende des Trägers 26 ein Schweißwerkzeug 171 auf, das lediglich ein drehbar an dem Träger 26 gelagertes Gehäuse und eine daran festgelegte Halteeinrichtung 172 aufweist. An dem Schweißwerkzeug 171 ist kein Schweißantriebsmotor, insbesondere kein Linearmotor, vorgesehen. Die Halteeinrichtung 172 weist zwei Backen 174 auf, zwischen denen ein Bolzen 36 so gehalten ist, daß er tangential zu einem Umkreis um die Drehachse 34 herum ausgerichtet ist. Mit anderen Worten erfolgt ein Fügevorgang nicht entlang einer geradlinigen Bewegung sondern entlang einer Kreisbahn. Die entsprechende Führungsrichtung ist in Fig. 12 als Teilkreis 176 gezeigt.

Als Fügeantriebseinrichtung dient bei dieser Ausführungsform ein Drehantrieb 175, der im Bereich der Steuereinrichtung 42 angeordnet ist. Drehbewegungen des Drehantriebs 175 werden über einen Riemenantrieb 80 auf das Schweißwerkzeug 171 übertragen. Es versteht sich, daß der Drehantrieb 175 vorzugsweise ein präziser elektrischer Schrittmotor ist, mit dem sich die diffizilen Bewegungen des Bolzens 36 während eines Bolzenschweißvorganges realisieren lassen. Der Drehantrieb 175 dient damit gleichzeitig auch als Ladeantrieb, indem er verschwenkt wird, um jeweils einen neuen Bolzen 36 von einer Übergabestation 180 einer Zuführeinrichtung 178 zu übernehmen.

In der Zuführeinrichtung 178 werden die Bolzen 36 nicht hintereinander sondern nebeneinander zugeführt, so, daß die Halteeinrichtung 172 die Bolzen 36 quer zu ihrer eigenen Erstreckung erfassen kann. Es versteht sich, daß die Zuführeinrichtung 178 entweder über geeignete Mittel zum Umwandeln der Längsbewegung aus der Vereinzelungsvorrichtung 52 in die Querausrichtung aufweisen kann, die in Fig. 12 gezeigt ist. Alternativ hierzu ist es auch möglich, die Bolzen 36 bereits aus der Vereinzelungseinrichtung 52 in Querlage heranzufördern.

Ferner ist in Fig. 12 schematisch ein an dem Träger 26 vorgesehenes Magazin 186 vorgesehen. Das Magazin 186 kann als Vorratsmagazin für eine Vielzahl von Bolzen 36 dienen, die dann mittels einer geeigneten integrierten Vereinzelungsvorrichtung zu der Zuführeinrichtung 178 bzw. der Übergabestation 180 übergeben werden. Es versteht sich, daß ein derartiges Magazin 186 auch bei den Ausführungsformen der Fig. 1 bis 11 anstelle einer stationären Vereinzelungsvorrichtung 52 oder zusätzlich hierzu Verwendung finden kann.

## Patentansprüche

1. Fügesystemkopf (22; 170) zur Befestigung an einem beweglichen Gestell (12), insbesondere an einem Roboter (12), mit
- einer Halteeinrichtung (66; 174) für ein Element (36), das auf ein Bauteil (38) zu fügen ist, und
- einer Fügeantriebseinrichtung (64; 175), um die Halteeinrichtung (66; 174) zum Fügen entlang einer Fügerichtung (40; 176) zu bewegen,
**dadurch gekennzeichnet, daß**
die Halteeinrichtung (66; 174) an dem Fügesystemkopf (22; 170) um eine Drehachse (34) drehbar gelagert ist, die quer zur Fügerichtung (40; 176) verläuft.

2. Fügesystemkopf nach Anspruch 1, **dadurch gekennzeichnet, daß** die Halteeinrichtung (66) und die Fügeantriebseinrichtung (64) als ein Fügewerkzeug (32) um die Drehachse (34) drehbar gelagert sind.

3. Fügesystemkopf nach Anspruch 2, **dadurch gekennzeichnet, daß** das Fügewerkzeug (32) an einem Endbereich eines vorstehenden länglichen Trägers (26) um die Drehachse (34) herum drehbar gelagert ist.

4. Fügesystemkopf nach Anspruch 3, **dadurch gekennzeichnet, daß** der längliche Träger (32) zwei etwa parallel verlaufende Trägerarme (116, 118) aufweist, zwischen denen das Fügewerkzeug (32) drehbar gelagert ist.

5. Fügesystemkopf nach Anspruch 3 oder 4, **dadurch gekennzeichnet, daß** die Drehachse (34) quer zur Längsachse (27) des Trägers (26) ausgerichtet ist.

6. Fügesystemkopf nach einem der Ansprüche 1 - 5, **dadurch gekennzeichnet, daß** der Fügesystemkopf (22; 170) eine Zuführeinrichtung (44; 178) mit Übergabestation (46; 180) zum Zuführen von Elementen (36) aufweist und daß eine Ladeantriebseinrichtung (68; 175, 80) dazu ausgelegt ist, die Halteeinrichtung (66; 174) bzw. das Fügewerkzeug (32) hin zu der Übergabestation (46; 180) zu drehen.

7. Fügesystemkopf nach Anspruch 3 und nach Anspruch 6, **dadurch gekennzeichnet, daß** die Übergabestation (46; 180) an dem Träger (26) festgelegt ist

8. Fügesystemkopf nach Anspruch 3 und nach einem der Ansprüche 6 oder 7, **dadurch gekennzeichnet, daß** die Ladeantriebseinrichtung (68) einen Drehmotor (68) aufweist, der an dem Endbereich des Trägers (26) angeordnet ist.

9. Fügesystemkopf nach Anspruch 3 und nach einem der Ansprüche 6 - 8, **dadurch gekennzeichnet, daß** die Ladeantriebseinrichtung (68) einen im Anfangsbereich des Trägers (26) angeordneten Drehmotor (68'; 175) und ein Getriebe (80) aufweist, das Bewegungen des Drehmotors (68'; 175) auf die Halteeinrichtung (66; 174) überträgt.

10. Fügesystemkopf nach Anspruch 9, **dadurch gekennzeichnet, daß** das Getriebe (80) ein Zugmittelgetriebe (80) ist.

11. Fügesystemkopf nach einem der Ansprüche 1-10, **dadurch gekennzeichnet, daß** die Ladeantriebseinrichtung (175) und die Fügeantriebseinrichtung (175) durch eine einzelne Drehantriebseinrichtung (175) gebildet sind.

12. Fügesystemkopf nach einem der Ansprüche 1-10, **dadurch gekennzeichnet, daß** die Fügeantriebseinrichtung (64) eine Linearantriebseinrichtung (104) aufweist.

13. Fügesystemkopf nach Anspruch 12, **dadurch gekennzeichnet, daß** die Längsachse (105) der Linearantriebseinrichtung (104) und die Längsachse (100) der Halteeinrichtung (66) voneinander parallel beabstandet sind.

14. Fügesystemkopf nach einem der Ansprüche 1 - 13, **dadurch gekennzeichnet, daß** die Halteeinrichtung (66; 174) eine Mehrzahl von Backen (88) aufweist, die um die Längsachse (100) der Halteeinrichtung (66; 174) herum verteilt angeordnet und aufeinander zu und voneinander weg beweglich sind, um jeweils ein Element (36) zu halten oder freizugeben.

15. Fügesystemkopf nach Anspruch 14, **dadurch gekennzeichnet, daß** die Halteeinrichtung (66; 174) zwei Backen (88A, 88B) aufweist.

16. Fügesystemkopf nach Anspruch 14 oder 15, **dadurch**
**gekennzeichnet, daß** die Backen (88) soweit voneinander weg beweglich sind, daß die Halteeinrichtung (66; 174) das Element (36) freigeben kann, indem sie schräg zur Fügerichtung (40; 176) von dem Element (36) abgezogen wird.

17. Fügesystemkopf nach Anspruch 16, **dadurch gekennzeichnet, daß** die Backen (88) soweit voneinander weg beweglich sind, daß die Halteeinrichtung (66; 174) das Element (36) freigeben kann, indem sie um die Drehachse (34) herum von dem Element (36) weg verschwenkt wird.

18. Fügesystemkopf nach einem der Ansprüche 14 - 17, **dadurch gekennzeichnet, daß** ein Backenaktuator (94) vorgesehen ist, der die Backen (88) aktiv öffnet und/oder schließt.

19. Fügesystemkopf nach einem der Ansprüche 14 - 18, **dadurch gekennzeichnet, daß** die Backen (88) elastisch ausgebildet oder elastisch gelagert (132) sind, so daß sie passiv aufeinander zu und/oder voneinander weg bewegbar sind.

20. Fügesystem (10) mit einem Roboter (12), der in wenigstens zwei Koordinatenachsen beweglich ist, und mit einem Fügesystemkopf (22; 170), der an dem Roboter (12) befestigt ist, **dadurch gekennzeichnet, daß** der Fügesystemkopf (22; 170) ein Fügesystemkopf (22; 170) nach einem der Ansprüche 1 - 19 ist.

21. Fügesystem nach Anspruch 20, **dadurch gekennzeichnet, daß** eine stationäre Vereinzelungseinrichtung (52) vereinzelte Elemente (36) hin zu der Zuführeinrichtung (44; 178) des Fügesystemkopfes (22; 170) fördert.

22. Verfahren zum Zuführen von Elementen (36) von einer stationären Einheit (52) zu einem beweglichen Fügesystemkopf (22; 170) und zum Fügen von zugeführten Elementen (36) mittels des Fügesystemkopfes (22; 170) auf Bauteile (38), wobei der Fügesystemkopf (22; 170) eine Halteeinrichtung (66; 174) für ein Element (36) aufweist, die an den Fügesystemkopf um eine Achse (34) drehbar gelagert ist, die quer zur Fügerichtung (40; 176) verläuft, mit den Schritten, ein Element (36) von der stationären Einheit (52) zu einer Übergabestation (46; 180) an dem Fügesystemkopf (22; 170) zuzuführen, die Halteeinrichtung (66; 174) hin zu der Übergabestation (46; 180) zu drehen, ein Element (36) von der Übergabestation (46; 180) in die Halteeinrichtung (66; 174) zu übernehmen, und das übernommene Element (36) auf ein Bauteil (38) zu fügen.

## Claims

1. Joining system head (22; 170) for attachment to a movable frame (12), in particular a robot (12), having
- a holding device (66; 174) for an element (36) to be joined to a component (38), and
- a joining drive device (64; 175) to move the holding device (66; 174) along a joining direction (40; 176) for joining, **characterised in that**
the holding device (66; 174) is mounted on the joining system head (22; 170), rotatable about an axis (34) running transverse to the joining direction (40; 176).

2. Joining system head according to claim 1, **characterised in that** the holding device (66) and the joining drive device (64) as a joining tool (32) are mounted rotatable about the axis of rotation (34).

3. Joining system head according to claim 2, **characterised in that** the joining tool (32) is mounted rotatable about the axis of rotation (34) at an end portion of a projecting elongated carrier (26).

4. Joining system head according to claim 3, **characterised in that** the elongated carrier (32) comprises two carrier arms (116, 118) running more or less parallel, between which the joining tool (32) is rotatably mounted.

5. Joining system head according to claim 3 or 4, **characterised in that** the axis of rotation (34) is oriented transverse to the longitudinal axis (27) of the carrier (26).

6. Joining system head according to any of claims 1 to 5, **characterised in that** the joining system head (22; 170) comprises a feeding device (44; 178) with transfer station (46; 180) for feeding elements (36) and **in that** a loading drive device (68; 175, 80) is designed to rotate the holding device (66; 174) or the joining tool (32) all the way to the transfer station (46; 180).

7. Joining system head according to claim 3 and according to claim 6, **characterised in that** the transfer station (46; 180) is fixed to the carrier (26).

8. Joining system head according to claim 3 and according to either of claims 6 and 7, **characterised in that** the loading drive device (68) comprises a rotary motor (68) arranged at the end portion of the carrier (26).

9. Joining system head according to claim 3 and according to any of claims 6 to 8, **characterised in that** the loading drive device (68) comprises a rotary motor (68'; 175) arranged in the initial portion of the carrier (26) and a transmission (80) transmitting motions of the rotary motor (68'; 175) to the holding device (66; 174).

10. Joining system head according to claim 9, **characterised in that** the transmission (80) is a transmission with tension means (80).

11. Joining system head according to any of claims 1 to 10, **characterised in that** the loading drive device (175) and the joining drive device (175) are formed by a single rotary drive device (175).

12. Joining system head according to any of claims 1 to 10, **characterised in that** the joining drive device (64) comprises a linear drive device (104).

13. Joining system head according to claim 12, **characterised in that** the longitudinal axis (105) of the linear drive device (104) and the longitudinal axis (100) of the holding device (66) are spaced apart parallel to each other.

14. Joining system head according to any of claims 1 to 13, **characterised in that** the holding device (66; 174) comprises a plurality of jaws (88) arranged distributed around the longitudinal axis (100) of the holding device (66; 174) and movable towards and away from each other in order to each time hold or release an element (36).

15. Joining system head according to claim 14, **characterised in that** the holding device (66; 174) comprises two jaws (88A, 88B).

16. Joining system head according to claim 14 or 15, **characterised in that** the jaws (88) are movable so far away from each other that the holding device (66; 174) can release the element (36) by being drawn off from the element (36) obliquely to the joining direction (40; 176).

17. Joining system head according to claim 16, **characterised in that** the jaws (88) are movable so far away from each other that the holding device (66; 174) can release the element (36) by being swung away from the element (36) about the axis of rotation (34).

18. Joining system head according to any of claims 14 to 17, **characterised in that** a jaw actuator (94) is provided, actively opening and/or closing the jaws (88).

19. Joining system head according to any of claims 14 to 18, **characterised in that** the jaws (88) are elastically configured or mounted (132) so that they are movable passively towards each other and/or away from each other.

20. Joining system (10) having a robot (12) movable on at least two coordinate axes and a joining system head (22; 170) mounted to the robot (12), **characterised in that** the joining system head (22; 170) is a joining system head (22; 170) according to any of claims 1 to 19.

21. Joining system according to claim 20, **characterised in that** a stationary individualizing device (52) conveys individual elements (36) to the feeding device (44; 178) of the joining system head (22; 170).

22. Method of feeding elements (36) from a stationary unit (52) to a movable joining system head (22; 170) and of joining fed elements (36) by means of the joining system head (22; 170) to components (38), said joining system head (22; 170) comprising a holding device (66; 174) for an element (36), mounted to the joining system head rotatable about an axis (34) running transverse to the joining direction (40; 176), with the steps of feeding an element (36) from the stationary unit (52) to a transfer station (46; 180) at the joining system head (22; 170), rotating the holding device (66; 174) to the transfer station (46; 180), picking up one element (36) from the transfer station (46; 180) into the holding device (66; 174), and joining the picked up element (36) to a component (38).

## Revendications

1. Tête de système de fixation (22 ; 170), pour fixation à un bâti (12) mobile, en particulier sur un robot (12), comprenant:
- un dispositif de maintien (66 ; 174) pour un élément(36), devant être fixé sur un composant (38), et
- un dispositif d'entraînement de fixation (64; 175), pour déplacer le dispositif de maintien (66 ; 174) pour fixation le long d'une direction de fixation le long d'une direction de fixation (40 ; 176),
**caractérisée en ce que**
le dispositif de maintien (66 ; 174) est monté en maintien à rotation sur la tête de système de fixation (22 ; 170) autour d'un axe de rotation (34) s'étendant transversalement par rapport à la direction de fixation (40 ; 176).

2. Tête de système de fixation selon la revendication 1, **caractérisée en ce que** le dispositif de maintien (66) et le dispositif d'entraînement et de fixation (64) sont montés à rotation en tant qu'outil de fixation (32), autour de l'axe de rotation (34).

3. Tête de système de fixation selon la revendication 2, **caractérisée en ce que** l'outil de fixation (32) est monté sur une zone d'extrémité d'un support (26) allongé en porte-à-faux, de façon à pouvoir tourner autour de l'axe de rotation (34).

4. Tête de système de fixation selon la revendication 3, **caractérisé en ce que** le support (32) allongé présente deux bras de support (116 ; 118) s'étendant à peu près parallèlement, entre lesquels l'outil de fixation (32) est monté de façon à pouvoir tourner.

5. Tête de système de fixation selon la revendication 3 ou 4, **caractérisée en ce que** l'axe de rotation (34) est orienté transversalement par rapport à l'axe longitudinal (27) du support (26).

6. Tête de système de fixation selon l'une des revendications 1 à 5, **caractérisée en ce que** la tête de système de fixation (22 ; 170) présente un dispositif d'alimentation (44 ; 178) avec un poste de transfert (46 ; 180) pour l'alimentation en éléments (36) et **en ce qu'**un dispositif d'entraînement de charge (68 ; 175 ; 80) est conçu pour faire tourner le dispositif de maintien (66 ; 174) ou l'outil de fixation (32) par rapport au poste de transfert (46 ; 180).

7. Tête de système de fixation selon la revendication 3 et selon la revendication 6, **caractérisée en ce que** le poste de transfert (46 ; 180) est fixé sur le support (26).

8. Tête de système de fixation selon la revendication 3 et selon l'une des revendications 6 ou 7, **caractérisée en ce que** le dispositif d'entraînement de charge (68) présente un moteur de rotation (68) disposé dans la région d'extrémité du support (26).

9. Tête de système de fixation selon la revendication 3 et selon l'une des revendications 6 à 8, **caractérisée en ce que** le dispositif d'entraînement de charge (68) présente un moteur de rotation (68', 175), disposé dans la zone initiale du support (26), et une transmission (80) transmettant des mouvements du moteur à rotation (68' ; 175) au dispositif de maintien (66 ; 174).

10. Tête de système de fixation selon la revendication 9, **caractérisée en ce que** la transmission (80) est une transmission à moyen de traction (80).

11. Tête de système de fixation selon l'une des revendications 1 à 10, **caractérisée en ce que** le dispositif d'entraînement de charge (175) et le dispositif d'entraînement de fixation (175) sont formés par un dispositif d'entraînement rotatif (175) unique.

12. Tête de système de fixation selon l'une des revendications 1 à 10, **caractérisée en ce que** le dispositif d'entraînement de fixation (64) présente un dispositif d'entraînement linéaire (104).

13. Tête de système de fixation selon la revendication 12, **caractérisée en ce que** l'axe longitudinal (105) du dispositif d'entraînement linéaire (104) et l'axe longitudinal (100) du dispositif de maintien (66) sont espacés l'un de l'autre, parallèlement.

14. Tête de système de fixation selon l'une des revendications 1 à 13, **caractérisée en ce que** le dispositif de maintien (66 ; 174) présente une pluralité de mâchoires (88) disposées de façon répartie autour de l'axe longitudinal (100) du dispositif de maintien (66 ; 174), et déplaçables, en rapprochement et en écartement mutuel, pour maintenir ou libérer chaque fois un élément (36).

15. Tête de système de fixation selon la revendication 14, **caractérisée en ce que** le dispositif de maintien (66 ; 174) présente deux mâchoires (88A ; 88B).

16. Tête de système de fixation selon la revendication 14 ou 15, **caractérisée en ce que** les mâchoires (88) sont déplaçables en écartement mutuel à un degré faisant que le dispositif de maintien (66 ; 174) peut libérer l'élément (36) par le fait qu'il est extrait de l'élément (36) obliquement par rapport à la direction de fixation (40 ; 176).

17. Tête de système de fixation selon la revendication 16, **caractérisée en ce que** les mâchoires (88) sont déplaçables en écartement mutuel à un degré faisant que le dispositif de maintien (66 ; 174) peut libérer l'élément (36) par le fait qu'il est écarté de l'élément (36), par un pivotement autour de l'axe de rotation (34).

18. Tête de système de fixation selon l'une des revendications 14 à 17, **caractérisée en ce qu'**un actionneur de mâchoires (94) est prévu ouvrant et/ou fermant de façon active les mâchoires (88).

19. Tête de système de fixation selon l'une des revendications 14 à 18, **caractérisée en ce que** les mâchoires (88) sont de réalisation élastique ou montées élastiquement (132), de manière qu'elles puissent être déplacées l'une vers l'autre ou écartées l'une de l'autre de façon passive.

20. Système de fixation (10) comprenant un robot (12), déplaçable en au moins deux axes de coordonnées, et avec une tête de système de fixation (22 ; 170) fixée sur le robot (12), **caractérisé en ce que** la tête de système de fixation (22 ; 170) est une tête de système de fixation (22 ; 170) selon l'une des revendications 1 à 19.

21. Système de fixation selon la revendication 20, **caractérisé en ce qu'**un dispositif d'individualisation (52) stationnaire transporte des éléments (36) individualisés vers le dispositif d'alimentation (44 ; 178) de la tête de système de fixation (22 ; 170).

22. Procédé d'alimentation en éléments (36), depuis une unité (52) stationnaire vers une tête de système de fixation (22 ; 170) mobile, et de fixation d'éléments (36) amenés au moyen d'une tête de système de fixation (22 ; 170), sur des composants (38), la tête de système de fixation (22 ; 170) présentant un dispositif de maintien (66 ; 174) pour un élément (36), qui est monté à rotation, sur la tête de système de fixation, autour d'un axe (34) s'étendant transversalement par rapport à la direction de fixation (40 ; 176), comprenant les étapes d'amenée d'un élément (36), venant de l'unité (52) stationnaire, à un poste de transfert (46 ; 180) à la tête de système de fixation (22 ; 170), de rotation du dispositif de maintien (66 ; 174) par rapport au poste de transfert (46 ; 180), de prise en charge d'un élément (36), par le poste de transfert (46 ; 180) dans le dispositif de maintien (66 ; 174), et la fixation de l'élément (36) pris en charge sur un composant (38).
